(19) Europäisches Patentamt
European Patent Office
Office européen des brevets

(11) EP 3 636 722 B1

(12) EUROPEAN PATENT SPECIFICATION

(45) Date of publication and mention of the grant of the patent:
**30.06.2021 Bulletin 2021/26**

(21) Application number: **18813362.3**

(22) Date of filing: **25.05.2018**

(51) Int Cl.:
***C09J 7/24** (2018.01)* ***C09J 107/00** (2006.01)*
***C09J 109/00** (2006.01)* ***C08K 3/11** (2018.01)*
***C08K 5/00** (2006.01)* ***C08K 5/12** (2006.01)*
***C08K 3/22** (2006.01)*

(86) International application number:
**PCT/JP2018/020161**

(87) International publication number:
**WO 2018/225541 (13.12.2018 Gazette 2018/50)**

# (54) PRESSURE-SENSITIVE ADHESIVE TAPE

DRUCKEMPFINDLICHES KLEBEBAND

RUBAN ADHÉSIF SENSIBLE À LA PRESSION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
**KH**

(30) Priority: **09.06.2017 JP 2017114357**

(43) Date of publication of application:
**15.04.2020 Bulletin 2020/16**

(73) Proprietor: **Denka Company Limited**
**Tokyo 103-8338 (JP)**

(72) Inventors:
- **SAWAMURA, Syota**
**Ichihara-city**
**Chiba 290-8588 (JP)**
- **HASUMI, Mizuki**
**Shibukawa-city**
**Gunma 377-8520 (JP)**

(74) Representative: **Gulde & Partner**
**Patent- und Rechtsanwaltskanzlei mbB**
**Wallstraße 58/59**
**10179 Berlin (DE)**

(56) References cited:
**JP-A- S6 011 543** **JP-A- S6 011 545**
**JP-A- S62 253 647** **JP-A- 2000 204 213**
**JP-A- 2003 219 533** **JP-A- 2004 359 844**
**JP-A- 2016 194 043** **JP-A- 2016 524 632**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 636 722 B1

## Description

### TECHNICAL FIELD

The present invention relates to an adhesive tape. The adhesive tape is suitably used for bundling high-voltage cables of electric cars and hybrid cars, and wire harnesses of cars.

### BACKGROUND

A polyvinyl chloride based adhesive tape prepared by applying an adhesive on one side of a substrate made of polyvinyl chloride resin is used for bundling wire harness of cars, since it has adequate flexibility and elongation properties, and is superior in flame retardancy, mechanical strength, heat distortion resistance, electrical insulating properties, and moldability; and is further relatively inexpensive (JP H08-259909 A, JP 2012-184369 A).

JP 2016-194043 A discloses an adhesive tape comprising a PVC-based substrate including a plasticizer, such as diisononyl phthalate (DINP). JP S60-11543 A and JP S60-11545 A both disclose a PVC composition comprising a plasticizer, such as tri-n-octyl trimellitate (TnOTM). JP 2003-219533 A and JP 2000-204213 A disclose a PVC composition comprising dioctyl phthalate (DOP) as plasticizer.

### SUMMARY OF THE INVENTION

### PROBLEMS TO BE SOLVED BY THE INVENTION

Recently, with the appearance and increase of hybrid cars and electric cars, a portion of high-voltage cable which connects a battery with a motor undergoes high heat generation. Therefore, higher heat insulating properties than conventional polyvinyl chloride based adhesive tape, which can prevent occurrence of cracks in the tape even when the cable and electric wire are bent after being exposed to high temperature environment, has been desired.

As the polyvinyl chloride based adhesive tape with high heat resistance, an adhesive tape prepared by crosslinking via ionizing radiation a substrate made by blending polyester based plasticizer and polyvinyl chloride resin has been proposed. However, the adhesive tape is over engineered in heat resistance, and the transfer of the polyester based plasticizer from the substrate to the adhesive layer is easily disturbed. Therefore, it is difficult to maintain adhesion properties similar to those of conventionally used phthalic acid based plasticizers. In addition, irradiation with ionizing radiation is high in cost, thereby giving rise to economic problems (JP H08-259909 A).

In addition, an adhesive tape which improves transfer of the plasticizer from the substrate to the adhesive layer by controlling the SP value (solubility parameter) of the plasticizer to 9.0 or higher so as to improve the deficiencies of the afore-mentioned polyester based plasticizers has been suggested. However, such effect can be achieved with acryl based adhesives having close SP value, but can achieve only low effect with rubber based adhesives (JP 2012-184369 A) .

The present invention has been made by taking the above circumstances into consideration. An object of the present invention is to provide an adhesive tape having superior mechanical properties, and can suppress occurrence of cracks after being exposed to high temperature conditions for a long period of time.

### MEANS TO SOLVE THE PROBLEM

According to the present invention, provided is an adhesive tape comprising a substrate and an adhesive layer formed on one side of the substrate; wherein the substrate is made of a resin composition comprising 40 to 65 parts by mass of high boiling point plasticizer having a boiling point of 410 °C or higher and 500 °C or lower, and 5 to 15 parts by mass of antimony trioxide with respect to 100 parts by mass of polyvinyl chloride resin.

### EFFECT OF THE INVENTION

The inventors have conducted intensive studies, and have found that when a certain amount of high boiling point plasticizer and a certain amount of antimony trioxide are used in combination, the adhesive tape has superior mechanical properties, and can suppress occurrence of cracks after being exposed to high temperature conditions for a long period of time, thereby completing the present invention.

Hereinafter, various embodiments of the present invention are exemplified. The following embodiments can be combined with each other.

Preferably, the high boiling point plasticizer comprises trimellitic acid ester.

Preferably, the trimellitic acid ester is trimellitic acid trialkyl ester represented by the following formula (1).

Preferably, an adhesive of the adhesive layer comprises one or more rubber selected from a natural rubber and a synthetic rubber; and a tackifier resin.
Preferably, the adhesive tape is used to bundle wire harness of a car.

## MODE FOR CARRYING OUT THE INVENTION

Hereinafter, various embodiments of the present invention will be described. Various distinctive features shown in the following embodiments can be combined with each other. In addition, an invention can be established independently for each of the distinctive features.

1. constitution of adhesive tape

The adhesive tape according to the first embodiment of the present invention comprises a substrate, and an adhesive layer formed on one side of the substrate. Hereinafter, each of the constitution will be described in detail.

1-1. substrate

The substrate of the present invention is made of a resin composition comprising 40 to 65 parts by mass of a high boiling point plasticizer, and 5 to 15 parts by mass of antimony trioxide with respect to 100 parts by mass of polyvinyl chloride resin.

<polyvinyl chloride resin>

The polyvinyl chloride resin of the present invention preferably has a mean degree of polymerization of 1000 to 1500, and two or more polyvinyl chloride resins having different mean degree of polymerization can be used. When the mean degree of polymerization is lower than 1000, the resin becomes too soft during substrate processing, and the film forming property can be deteriorated. When the mean degree of polymerization is higher than 1500, the substrate becomes rigid, and the following property of the tape with the electric wire when the tape is wound onto the electric wire can be deteriorated.

<high boiling point plasticizer>

The high boiling point plasticizer of the present invention has a boiling point of 410°C or higher, preferably 415°C or higher, and more preferably 420°C or higher. The boiling point of the high boiling point plasticizer is preferably 500°C or lower, more preferably 480°C or lower, further preferably 460°C or lower, and even further preferably 450°C or lower. In the present specification, "boiling point" is a value measured at vapor pressure of 101.3 kPa·s. As the high boiling point plasticizer, trimellitic acid ester, adipic acid ester, and phthalic acid ester can be exemplified, and trimellitic acid ester is preferable. By using trimellitic acid ester, change in the rate of tensile-elongation before and after heat treatment can be suppressed.
Trimellitic acid ester is preferably a trimellitic acid trialkyl ester (trimellitic acid tri(C4-C11 alkyl) ester). In formula 1, n is preferably 5 to 10, more preferably 6 to 9, and further preferably 8.

[chemical formula 1]

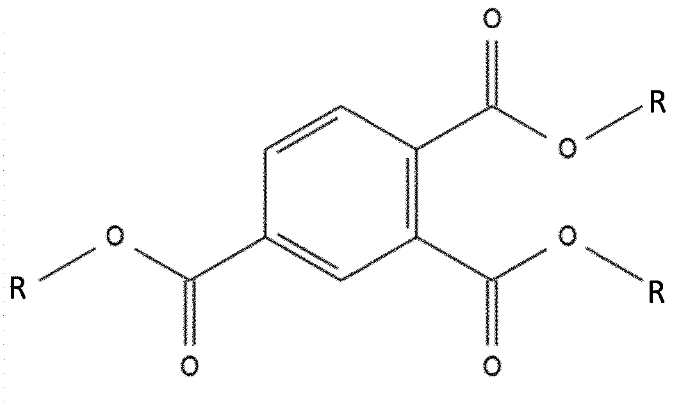

... Formula 1

$$R = C_nH_{2n+1} (n = 4 \sim 11)$$

As the trimellitic acid tri(C4-C11 alkyl) ester, tributyl trimellitate, trihexyl trimellitate, tri-n-octyl trimellitate, triisooctyl trimellitate, tri-2-ethylhexyl trimellitate, trinonyl trimellitate, and the like can be mentioned. Here, tri-2-ethylhexyl trimellitate is especially preferable. Molecular weight of the trimellitic acid ester is 400 to 700 for example, preferably 450 to 650, and more preferably 500 to 600.

Adipic acid ester is preferably diisononyl adipate. The molecular weight of the adipic acid ester is 380 to 600 for example, preferably 385 to 500, and more preferably 390 to 450.

Phthalic acid ester is preferably diisodecyl phthalate. Molecular weight of phthalic acid is 430 to 700 for example, preferably 435 to 600, and more preferably 440 to 500.

These compounds can be used alone, or two or more of these can be used as the high boiling point plasticizer.

The content of the high boiling point plasticizer in the present invention is 40 to 65 parts by mass, preferably 50 to 60 parts by mass with respect to 100 parts by mass of the polyvinyl chloride resin. When the content of the high boiling point plasticizer is less than 40 parts by mass, flexibility of the adhesive tape cannot be achieved, and thus the following property of the tape when the tape is wound onto the electric wire and the like can be deteriorated, and cracks can occur in the adhesive tape when the tape is heated after the adhesive tape is wound onto the electric wire. When the content of the high boiling point plasticizer is more than 65 parts by mass, the substrate would become too soft, and the tensile strength and the film forming property can degrade.

<antimony trioxide>

The content of antimony trioxide contained in the substrate of the present invention is 5 to 15 parts by mass, preferably 7 to 12 parts by mass with respect to 100 parts by mass of the polyvinyl chloride resin.

When the content of the antimony trioxide is less than 5 parts by mass, the oxygen index would be below 23, fire retardant property of the adhesive tape would degrade, and cracks can occur in the adhesive tape when the tape is heated after the adhesive tape is wound onto the electric wire. When the content of antimony trioxide exceeds 15 parts by mass, cracks can occur in the adhesive tape when the tape is heated after the adhesive tape is wound onto the electric wire.

<other components>

Here, if necessary, the substrate of the present invention can include, in a range which does not impair the effect of the present invention, a low boiling point plasticizer having a boiling point of lower than 410° C, an inorganic filler, modifier, and further colorant, stabilizer, antioxidant, UV absorber, lubricant and the like as other additives.

As the low boiling point plasticizer, for example, phthalate ester based plasticizer, adipate ester based plasticizer, epoxy based plasticizer and the like can be used. As a particular example of the low boiling point plasticizer, DINP (diisononyl phthalate), DHP (diheptyl phthalate), DOP (di-2-ethylhexyl phthalate), n-DOP (di-n-octyl phthalate), BBP (benzyl butyl phthalate), DOA (di-2-ethylhexyl phthalate) and the like can be mentioned. These plasticizers can be used alone, or two or more of these can be used in combination.

As the inorganic filler for example, aluminum hydroxide, magnesium hydroxide, zirconium hydroxide, calcium hydroxide, potassium hydroxide, barium hydroxide, triphenyl phosphite, ammonium polyphosphate, polyphosphate

amide, zirconium oxide, magnesium oxide, zinc oxide, titanium oxide, molybdenum oxide, guanidine phosphate, hydrotalcite, snaketite, zinc borate, anhydrous zinc borate, zinc metaborate, barium metaborate, antimony oxide, antimony pentoxide, red phosphorus, talc, alumina, silica, boehmite, bentonite, sodium silicate, calcium silicate, calcium sulfate, calcium carbonate, and magnesium carbonate can be mentioned. These inorganic fillers can be used alone, or two or more of these can be used in combination.

As the modifier for example, vinyl chloride-vinyl acetate copolymer, vinyl chloride-ethylene copolymer, vinyl chloride-propylene copolymer, chlorinated polyethylene, ethylene-vinyl acetate copolymer, acrylonitrile-butadiene-styrene copolymer, methyl methacrylate-butadiene-styrene copolymer, acrylonitrile-butadiene copolymer, thermoplastic polyurethane, polyester based thermoplastic elastomer and the like can be mentioned. These modifiers can be used alone, or two or more of these can be used in combination.

<manufacturing method of substrate>

The substrate of the present invention can be obtained by melting and kneading a resin composition prepared by mixing polyvinyl chloride resin, plasticizer, inorganic filler, thermal stabilizer, light absorber, pigment, and other additives. The melt-kneading method is not particularly limited. Here, various mixers and kneaders equipped with a heating device such as a twin-screw extruder, continuous and batch kneaders, rolls, and a Banbury mixer can be used. The resin composition is mixed so as to disperse uniformly, and the mixture obtained is molded into a substrate by a common molding method such as calendar method, T-die method, inflation method and the like. As the molding machine, a calendar molding machine is preferable in terms of productivity, color exchange, and uniformity of the shape. As the roll arrangement in the calendar molding, known arrangement such as L-shaped arrangement, inversed L-shaped arrangement, and Z-shaped arrangement can be used. In addition, the temperature of the rolls are set usually to 150 to 200°C, preferably to 155 to 190°C. The thickness of the substrate varies depending on the purpose and use, and is usually 40 to 450μm, preferably 50 to 200μm, and more preferably 55 to 100μm.

1-2. adhesive layer

The adhesive of the adhesive layer of the adhesive tape according to the present invention is preferably a rubber based adhesive. The adhesive can be either one of a solvent adhesive or an emulsion adhesive. Regarding the rubber based adhesive, an adhesive including one or more rubber selected from a natural rubber and a synthetic rubber; and a tackifier resin is preferable. The adhesive is preferably a mixture of a natural rubber, synthetic rubber, and a tackifier resin. The mixing ratio of the tackifier resin is preferably 50 to 150 parts by mass with respect to 100 parts by mass of the rubber component which is a mixture including natural rubber and synthetic rubber.

As the natural rubber and the synthetic rubber, natural rubber-methyl methacrylate copolymer latex, styrene-butadiene copolymer, acrylonitrile-butadiene copolymer, methyl methacrylate-butadiene copolymer and the like can be mentioned. These rubbers can be used alone or two or more of these can be used in combination.

The tackifier resin can be selected by taking into consideration of the softening point, compatibility with each of the components and the like. For example, emulsion of terpene resin, rosin resin, hydrogenated rosin resin, coumarone / indene resin, styrene based resin, aliphatic petroleum resin, alicyclic petroleum resin, terpene-phenol resin, xylene based resin, other aliphatic hydrocarbon resin or aromatic hydrocarbon resin and the like can be mentioned. These tackifier resins can be used alone, or two or more of these can be used in combination.

The rubber based adhesive can be arbitrarily selected from solvent adhesive and emulsion adhesive. Here, emulsion adhesive is preferable since generation of VOC is less.

1-3. primer layer

Here, if necessary, the adhesive tape of the present invention can include, so long as it does not impair the effect of the present invention, a primer layer in between the substrate and the adhesive layer, for the purpose of improving adhesion property of the adhesive layer with the substrate.

As the primer which forms the primer layer, the one including 25 to 300 parts by mass of acrylonitrile-butadiene copolymer with respect to 100 parts by mass of a graft copolymer obtained by graft polymerizing methyl methacrylate with natural rubber is preferable.

The graft polymer used as the primer obtained by graft polymerizing methyl methacrylate with natural rubber is preferably a graft polymer obtained by graft polymerizing 30 to 50 mass% of methyl methacrylate with 70 to 50 mass% of natural rubber. When the ratio of the methyl methacrylate in the graft polymer is less than 30 mass%, the adhesion property of the methyl methacrylate with the film substrate degrades, thereby causing a case where inter-layer delamination of the adhesive tape occurs . When the ratio of the methyl methacrylate in the graft polymer exceeds 50 mass%, the primer itself becomes rigid, and thus the primer would not be able to follow the deformation of the film substrate,

thereby resulting in a case where inter-layer delamination of the adhesive tape occurs.

As the acrylonitrile-butadiene copolymer used as the primer, medium nitrile type (25 to 30 mass% of acrylonitrile, 75 to 70 mass% of butadiene), medium-high nitrile type (31 to 35 mass% of acrylonitrile, 69 to 65 mass% of butadiene), high nitrile type (36 to 43 mass% of acrylonitrile, 64 to 57 mass% of butadiene) and the like can be mentioned. These acrylonitrile-butadiene copolymers can be used alone, or two or more of these can be used in combination.

2. manufacturing method of adhesive tape

The adhesive tape of the present invention can be obtained in the following manner. First, the primer is coated on one side of the substrate, followed by thorough drying of the solvent in a drying oven. Subsequently, the adhesive is coated, followed by thorough drying of the solvent in a drying oven, in a similar manner as the primer. Here, as the method for coating the primer, gravure method, spray method, kiss roll method, bar method, knife method and the like can be mentioned. As the method for coating the adhesive, comma method, lip die method, gravure method, roll method, slot die method and the like can be mentioned. The thickness of the primer is usually 0.1 to 1μm, preferably 0.3 to 0.5μm. The thickness of the top coat varies depending on the purpose and use, and is usually 5 to 50μm, preferably 10 to 30μm.

3. physical property and use of adhesive tape

The adhesive tape of the present invention after heat treatment at 120°C for 168 hours preferably has a rate of tensile-elongation of 80% or higher. When the rate of tensile-elongation is lower than 80%, cracks can occur in the adhesive tape when the tape is heated after the adhesive tape is wound onto the electric wire.

The adhesive tape of the present invention preferably has a tensile strength of 15 N/10mm or higher, more preferably 16 N/10mm or higher.

The adhesive tape of the present invention is an adhesive tape for bundling high-voltage cables of electric cars and hybrid cars, and wire harnesses of cars.

**EXAMPLES**

Hereinafter, the present invention will be explained in further detail with reference to the Examples. Here, these examples are merely presented as an example, and shall not limit the present invention.

<tensile strength>

Tensile strength was obtained in accordance with JIS C 2107. Measurement was performed in an evaluation test chamber kept under temperature of 20 ± 2°C and humidity of 50 ± 5%RH. The measurement results are evaluated with the following criteria.

good : tensile strength is 15 N/10mm or higher
not good : tensile strength is lower than 15 N/10mm

<rate of tensile-elongation>

Rate of tensile-elongation was measured in accordance with JIS C 2107. Measurement was performed with a sample tape having a length of 150mm and a width of 10mm, in an evaluation test chamber kept under temperature of 20 ± 2°C and humidity of 50 ± 5%RH. The measurement results are evaluated with the following criteria.

good : rate of tensile-elongation is 100% or higher
not good : rate of tensile-elongation is lower than 100%

<rate of tensile-elongation after heat treatment>

Rate of tensile-elongation was measured in accordance with JIS C 2107. Measurement was performed with a sample tape having a length of 150mm and a width of 10mm. The sample tape was subjected to heat treatment in a gear oven at 120 ± 2°C for 168 hours, followed by cooling at ambient temperature for 2 hours. The rate of tensile-elongation of the sample tape was then measured. The measurement results are evaluated with the following criteria.

good : rate of tensile-elongation is 80% or higher
not good : rate of tensile-elongation is lower than 80%

<terminal peeling>

The adhesive tape was wound onto a bundle of electric wires having φ10mm. The terminal portion was visually observed for occurrence of terminal peeling when the end of the wounded adhesive tape was cut.

good : no terminal peeling occurred at the terminal portion
not good : terminal peeling occurred at the terminal portion

<cracks>

A sample was prepared by winding the adhesive tape onto a bundle of electric wires having φ10mm. The sample was then subjected to heat treatment in a gear oven at 120 ± 2°C for 168 hours, followed by cooling at ambient temperature for 2 hours. The sample was then folded at the center of the bundle of electric wires by hand. Visual observation was performed with the following criteria.

good : no crack occurred in the adhesive tape
not good : crack occurred in the adhesive tape

<oxygen index>

Oxygen index (OI) was measured in accordance with JIS K 7201. Measurement was performed with a sample tape having a length of 100mm and a width of 20mm. The sample tape was arranged so that the upper portion of the sample tape would be placed at 100mm or more from the upper end of the combustion cylinder. The length of the flame of the igniter was adjusted to 15 to 20mm, and the upper end of the sample tape was ignited. Time elapsed after the sample tape was ignited until the flame extinguished was measured. The maximum oxygen flow and nitrogen flow which allows the burning time of the sample tape to be 4 seconds or less was determined, and the oxygen index was obtained using the following equation.

$$\text{OI value (\%)} = (\text{oxygen flow (L/min)}/(\text{oxygen flow (L/min)} + \text{nitrogen flow (L/min)})$$

[Example 1]

(1) Polyvinyl chloride resin (TH-1000, available from TAIYO VINYL CORPORATION, mean degree of polymerization of 1000), tri-2-ethylhexyl trimellitate (TOTM, available from DIC Corporation) as plasticizer, and antimony trioxide (Fire Cut TOP-5, available from SUZUHIRO CHEMICAL CO., LTD.) were melt and kneaded with the formulation shown in Table 1 using a Banbury mixer, thereby dispersing the ingredients uniformly. A substrate having a thickness of 150μm was prepared using a calendar molding machine at a roll temperature of 165°C.
(2) To one side of the substrate thus prepared, an emulsion mixture of graft polymer latex obtained by graft polymerization of methyl methacrylate with natural rubber and acrylonitrile butadiene copolymer emulsion (KT4612A, available from Emulsion Technology Co., Ltd.) was coated as a primer by gravure method, followed by drying. Subsequently, adhesive containing 60 parts by mass (solids) of natural rubber latex (HA LATEX, available from REGITEX Co., Ltd), 40 parts by mass (solids) of graft copolymer latex obtained by graft polymerization of methyl methacrylate with natural rubber (MG-40S, available from REGITEX Co., Ltd), and 135 parts by mass (solids) of petroleum resin based emulsion tackifier (AP-1100-NT, available from ARAKAWA CHEMICAL INDUSTRIES, LTD.) was coated by comma method and dried. The adhesive sheet thus obtained was wound into a tape log shape, cut to 10mm width, thereby obtaining a tape sample. Results of evaluations of various characteristics are shown in Table 1.

[Examples 2 to 15 and Comparative Examples 1 to 15]

Type and formulation amount of plasticizer and formulation amount of antimony trioxide were altered as shown in Tables 1 to 2. The other conditions were the same as Example 1, thereby obtaining tape samples. Results of evaluations of various characteristics are shown in Tables 1 to 2.

[Table 1]

| Table 1 | | | Examples | | | | | | | | | | | | | | |
|---|---|---|---|---|---|---|---|---|---|---|---|---|---|---|---|---|---|
| | | | 1 | 2 | 3 | 4 | 5 | 6 | 7 | 8 | 9 | 10 | 11 | 12 | 13 | 14 | 15 |
| formulation | polyvinyl chloride resin | | 100 | 100 | 100 | 100 | 100 | 100 | 100 | 100 | 100 | 100 | 100 | 100 | 100 | 100 | 100 |
| | plasticizer | TOTM | 40 | 50 | 65 | | | | | | | 50 | 50 | | | | |
| | | DINA | | | | 40 | 50 | 65 | | | | | | 50 | 50 | | |
| | | DIDP | | | | | | | 40 | 50 | 65 | | | | | 50 | 50 |
| | | TPTM | | | | | | | | | | | | | | | |
| | | DOA | | | | | | | | | | | | | | | |
| | | DINP | | | | | | | | | | | | | | | |
| | antimony trioxide | | 10 | 10 | 10 | 10 | 10 | 10 | 10 | 10 | 10 | 5 | 15 | 5 | 15 | 5 | 15 |
| evalution | tensile strength (N/10mm) | | 23.5 | 18.2 | 15.6 | 23.6 | 18.4 | 16.0 | 22.8 | 17.5 | 15.2 | 16.4 | 21.5 | 16.7 | 22.1 | 15.8 | 20.1 |
| | rate of tensile-elongation(%) | | 120 | 180 | 220 | 130 | 190 | 220 | 140 | 190 | 230 | 200 | 160 | 210 | 170 | 210 | 160 |
| | rate of tensile-elongation after heat treatment(%) | | 100 | 150 | 180 | 90 | 130 | 150 | 90 | 110 | 130 | 160 | 120 | 150 | 110 | 130 | 100 |
| | terminal peeling | | good | good | good | good | good | good | good | good | good | good | good | good | good | good | good |
| | cracks | | good | good | good | good | good | good | good | good | good | good | good | good | good | good | good |
| | oxygen index | | 24 | 24 | 24 | 24 | 24 | 24 | 24 | 24 | 24 | 23 | 25 | 23 | 25 | 23 | 25 |

[Table 2]

| Table 2 | | | Comparative Example | | | | | | | | | | | | | | |
|---|---|---|---|---|---|---|---|---|---|---|---|---|---|---|---|---|---|
| | | | 1 | 2 | 3 | 4 | 5 | 6 | 7 | 8 | 9 | 10 | 11 | 12 | 13 | 14 | 15 |
| formulation | polyvinyl chloride resin | | 100 | 100 | 100 | 100 | 100 | 100 | 100 | 100 | 100 | 100 | 100 | 100 | 100 | 100 | 100 |
| | plasticizer | TOTM | 30 | 70 | | | | | | | | 50 | 50 | | | | |
| | | DINA | | | 30 | 70 | | | | | | | | 50 | 50 | | |
| | | DIDP | | | | | 30 | 70 | | | | | | | | 50 | 50 |
| | | TPTM | | | | | | | 50 | | | | | | | | |
| | | DOA | | | | | | | | 50 | | | | | | | |
| | | DINP | | | | | | | | | 50 | | | | | | |
| | antimony trioxide | | 10 | 10 | 10 | 10 | 10 | 10 | 10 | 10 | 10 | 3 | 20 | 3 | 20 | 3 | 20 |
| evalution | tensile strength(N/10mm) | | 25.1 | 14.2 | 24.5 | 13.8 | 23.9 | 13.4 | 17.8 | 17.5 | 18.0 | 15.2 | 25.5 | 15.5 | 25.8 | 14.8 | 24.5 |
| | rate of tensile-elongation(%) | | 90 | 240 | 100 | 250 | 110 | 260 | 180 | 190 | 180 | 200 | 150 | 220 | 120 | 210 | 130 |
| | rate of tensile-elongation after heat treatment(%) | | 70 | 160 | 70 | 150 | 60 | 140 | 40 | 20 | 45 | 150 | 120 | 150 | 80 | 130 | 70 |
| | terminal peeling | | not good | good | not good | good | not good | good | good | good | good | good | good | good | good | good | good |
| | cracks | | not good | good | not good | good | not good | good | not good | not good | not good | not good | not good | not good | not good | not good | not good |
| | oxygen index | | 24 | 24 | 24 | 24 | 24 | 24 | 24 | 24 | 24 | 21 | 26 | 21 | 26 | 21 | 26 |

The details of the plasticizers shown in Tables 1 to 2 are shown in Table 3.

[Table 3]

| abbreviation | name | boiling point (°C) | molecular weight (g/mol) | product |
|---|---|---|---|---|
| TOTM | tri-2-ethylhexyl trimellitate | 430 | 547 | TOTM. available from DIC Corporation |
| DINA | diisononyl adipate | 440 | 399 | DINA, available from J-PLUS Co., Ltd. |
| DIDP | diisodecyl phthalate | 420 | 447 | DIDP, available from J-PLUS Co.. Ltd. |
| TPTM | tripropyl trimellitate | 360 | 336 | T1446. Tokyo Chemical Industry Co.. Ltd |
| DOA | di-2-ethylhexyl phthalate | 335 | 371 | DOA. available from J-PLUS Co.. Ltd. |
| DIN P | diisononyl phthalate | 403 | 419 | DINP, available from J-PLUS Co.. Ltd. |

<discussion>

As shown in Table 1, when a substrate made of a resin composition comprising 40 to 65 parts by mass of high boiling point plasticizer and 5 to 15 parts by mass of antimony trioxide with respect to 100 parts by mass of polyvinyl chloride resin is used, the adhesive tape has superior mechanical properties, and can suppress occurrence of cracks after being exposed to high temperature conditions for a long period of time. In addition, with the Examples using trimellitic acid ester, the change in the rate of tensile-elongation before and after heat treatment was small.

As can be understood from Comparative Examples 1, 3, and 5, when the formulation amount of high boiling point plasticizer was insufficient, terminal peeling occurred, rate of tensile-elongation of the adhesive tape after heat treatment was small, and cracks occurred in the adhesive tape after heat treatment.

As can be understood from Comparative Examples 2, 4, and 6, when the formulation amount of the high boiling point plasticizer was excess, tensile strength of the adhesive tape was insufficient.

As can be understood from Comparative Examples 7 to 9, when the boiling point of the plasticizer was lower than 410°C, terminal peeling occurred, rate of tensile-elongation of the adhesive tape after heat treatment was small, and cracks occurred in the adhesive tape after heat treatment.

As can be understood from Comparative Examples 10, 12, and 14, when the formulation amount of antimony trioxide was insufficient, cracks occurred in the adhesive tape after heat treatment.

As can be understood from Comparative Examples 11, 13, and 15, when the formulation amount of antimony trioxide was excess, rate of tensile-elongation of the adhesive tape after heat treatment was small, and cracks occurred in the adhesive tape after heat treatment.

**INDUSTRIAL APPLICABILITY**

When the adhesive tape of the present invention is used, the adhesive tape can endure heat generation in the high-voltage cable portion which connects batteries of hybrid cars and electric cars with a motor. In addition, electric wire bundles such as high-voltage cables and wire harnesses can be bundled without occurrence of cracks in the adhesive tape.

**Claims**

1. An adhesive tape comprising a substrate and an adhesive layer formed on one side of the substrate; wherein
the substrate is made of a resin composition comprising a polyvinyl chloride resin, 40 to 65 parts by mass of a high boiling point plasticizer having a boiling point of 410 °C or higher and 500 °C or lower, measured at vapor pressure of 101.3 kPa.s, and 5 to 15 parts by mass of antimony trioxide, with respect to 100 parts by mass of the polyvinyl chloride resin.

2. The adhesive tape of Claim 1, wherein the high boiling point plasticizer comprises trimellitic acid ester.

3. The adhesive tape of Claim 2, wherein the trimellitic acid ester is trimellitic acid trialkyl ester represented by the following formula (1):

[Chemical Formula 1]

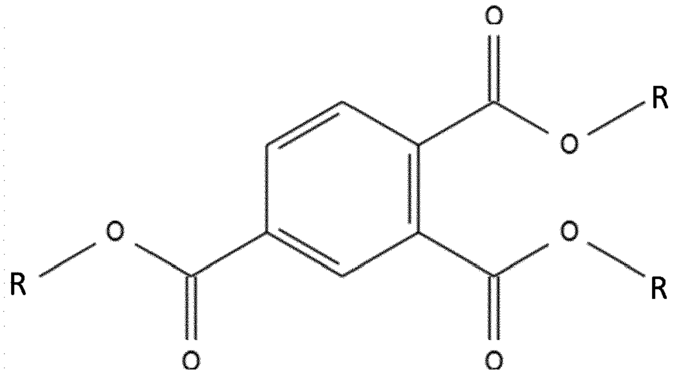

$R = C_nH_{2n+1} (n = 4 \sim 11)$

Formula 1

4. The adhesive tape according to any one of Claims 1 to 3, wherein an adhesive of the adhesive layer comprises one or more rubber selected from a natural rubber and a synthetic rubber; and a tackifier resin.

5. Use of the adhesive tape according to any one of Claims 1 to 4 for bundling a wire harness of a car.

**Patentansprüche**

1. Klebeband, das ein Substrat und eine auf einer Seite des Substrats ausgebildete Klebeschicht umfasst; wobei das Substrat aus einer Harzzusammensetzung hergestellt ist, umfassend ein Polyvinylchlorid-Harz, 40 bis 65 Masseteile eines hoch siedenden Weichmachers, der einen Siedepunkt von 410 °C oder höher und 500 °C oder niedriger aufweist, gemessen bei einem Dampfdruck von 101,3 kPa.s,
und 5 bis 15 Masseteile Antimontrioxid, bezogen auf 100 Masseteile des Polyvinylchlorid-Harzes.

2. Klebeband nach Anspruch 1, wobei der hoch siedende Weichmacher Trimellithsäureester umfasst.

3. Klebeband nach Anspruch 2, wobei der Trimellithsäureester Trimellithsäuretrialkylester ist, dargestellt durch die folgende Formel (1):

[Chemische Formel 1]

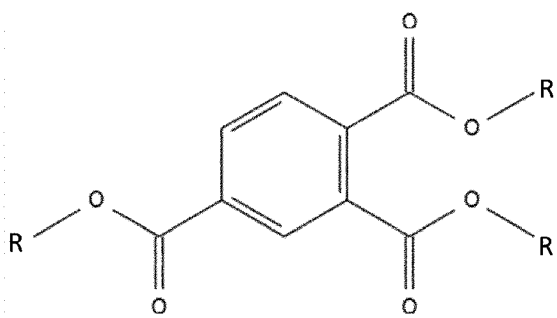

$R = C_nH_{2n+1} (n = 4 \sim 11)$

Formel 1

**4.** Klebeband nach einem der Ansprüche 1 bis 3, wobei ein Klebstoff der Klebeschicht einen oder mehrere Kautschuke, ausgewählt aus einem Naturkautschuk und einem Synthesekautschuk, und ein Klebrigmacher-Harz, umfasst.

**5.** Verwendung des Klebebands nach einem der Ansprüche 1 bis 4 zum Bündeln eines Kabelbaums eines Autos.

**Revendications**

**1.** Ruban adhésif comprenant un substrat et une couche adhésive formée sur un côté du substrat ;
le substrat étant composé d'une composition de résine comprenant une résine de polychlorure de vinyle, de 40 à 65 parties en masse d'un plastifiant à point d'ébullition élevé ayant un point d'ébullition supérieur ou égal à 410 °C ou inférieur ou égal à 500 °C, mesuré à une pression de vapeur de 101,3 kPa.s,
et de 5 à 15 parties en masse de trioxyde d'antimoine relativement à 100 parties en masse de la résine de polychlorure de vinyle.

**2.** Ruban adhésif selon la revendication 1, le plastifiant à point d'ébullition élevé comprenant de l'ester d'acide trimellitique.

**3.** Ruban adhésif selon la revendication 2, l'ester d'acide trimellitique étant l'ester trialkyle d'acide trimellitique représenté par la formule suivante (1) :

[Formule chimique 1]

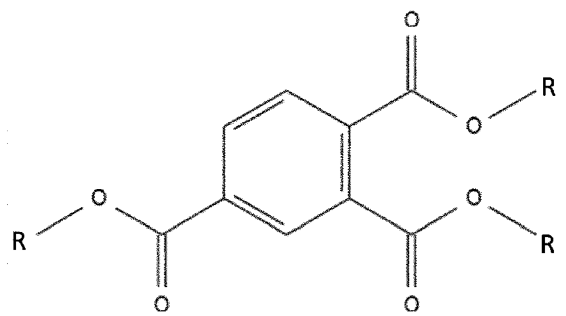

$R = C_nH_{2n+1} (n = 4 \sim 11)$

Formule 1

**4.** Ruban adhésif selon l'une quelconque des revendications 1 à 3, un adhésif de la couche adhésive comprenant un ou plusieurs caoutchoucs sélectionné parmi le groupe se composant d'un caoutchouc naturel et d'un caoutchouc synthétique ; et une résine poisseuse.

**5.** Utilisation du ruban adhésif selon l'une quelconque des revendications 1 à 4 pour lier un faisceau de câbles d'une voiture.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H08259909 A
- JP 2012184369 A
- JP 2016194043 A
- JP S6011543 A
- JP S6011545 A
- JP 2003219533 A
- JP 2000204213 A